# EUROPÄISCHE PATENTSCHRIFT

(11) **EP 2 138 280 B1**
(45) Veröffentlichungstag und Bekanntmachung des Hinweises auf die Patenterteilung: **16.03.2011**
(21) Anmeldenummer: 09008273.6
(22) Anmeldetag: 24.06.2009
(51) Int. Cl.: B25J 15/04, B25J 19/02

(54) **Roboter und Verfahren zum Befestigen eines Werkzeugs an einem Roboter**
Robots and method for attaching a tool to a robot
Robot et procédé de fixation d'un outil sur un robot

(30) Priorität: 25.06.2008 DE 102008002642
(43) Veröffentlichungstag der Anmeldung: 30.12.2009
(73) Patentinhaber: KUKA Laboratories GmbH, 86165 Augsburg (DE)
(72) Erfinder: Ortmaier, Tobias, 30966 Hemmingen (DE); Eggers, Georg, 69198 Schriesheim (DE); Vieira, Vitor, 69214 Eppelheim (DE)
(74) Vertreter: Patentanwälte Funk & Böss GbR

(56) Entgegenhaltungen:
- EP-A- 1 527 852
- US-A- 5 668 628
- US-A- 5 974 643
- US-A1- 2004 172 164

## Beschreibung

Die Erfindung betrifft Verfahren zum Befestigen eines Werkzeugs an einen Roboter.

Roboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Industrieroboter weisen im Wesentlichen einen Roboterarm mit mehreren Achsen und Hebeln auf, die von Antrieben bewegt werden. Die Antriebe sind z.B. elektrische Antriebe. An einem der Enden weisen die Roboterarme in der Regel eine Befestigungsvorrichtung zum Befestigen der zweckdienlichen Werkzeuge auf.

Je nach Anwendung kann es vorgesehen sein, die Befestigungsvorrichtung an das Werkzeug heranzuführen, damit dieses an der Befestigungsvorrichtung befestigt werden kann.

Die US 5,321,353 offenbart einen Roboter, an dessen Roboterarm ein Werkzeug befestig ist. Seitlich am Werkzeug ist eine Kamera in einem vorgegebenen Winkel befestigt, mittels derer der Roboter das Werkzeug relativ zu einem Arbeitsplatz positionieren kann.

Die EP 1 527 852 A1 offenbart einen Industrieroboter mit einem Roboterarm und einer bildgebenden Optik, die in einem Flansch des Roboterarms angeordnet ist und deren optische Achse durch einen transparenten Bereich des Flansches hindurch tritt. Der Flansch ist zum Befestigen eines Endeffektors vorgesehen.

Die US 5,974,643 offenbart einen Industrieroboter mit einem einen Flansch umfassenden Roboterarm. Am Flansch kann ein als Revolverkopf ausgebildetes Werkzeug befestigt werden. Im Betrieb des Industrieroboters wird der Flansch mittels eines Controllers zu einem Werkzeuglagerplatz bewegt, damit der Revolverkopf am Flansch befestigt werden kann.

Die Aufgabe der vorliegenden Erfindung ist es, Voraussetzungen für ein verbessertes Heranführen der Befestigungsvorrichtung eines Roboterarms an ein Werkzeug anzugeben.

Die Aufgabe der Erfindung wird in einer ersten Variante durch ein Verfahren gemäß Anspruch 1 gelöst, und in einer zweiten Variante durch ein Verfahren gemäß Anspruch 3.

Bei der erten Variante, wird ein manuelles Heranführen der ersten Befestigungsvor-richtung, z.B. mittels eines Handgerätes oder durch manuelles Ziehen und/oder Drücken am Roboterarm unterstützt und bei der zweiten Variante wird ein automatisches Heranführen unterstützt.

Der für das erfindungsgemäße Verfahren verwendete Roboter weist demnach die Kamera auf, die im oder am Roboterarm angeordnet ist und deren bildgebgende Optik derart ausgerichtet ist, dass die von der bildgebeneden Optik ausgehende optische Achse durch die ersten Befestigungsvorrichtung verläuft. Dadurch ist es möglich, dass die Kamera durch die erste Befestigungsvorrichtung, die vorgesehen ist, das Werkzeug aufzunehmen, Bilder anfertigt. Unter Bilder wird auch ein einem Bild zugeordneter Bilddatensatz verstanden. Dadurch, dass die optische Achse der Kamera durch die erste Befestigungsvorrichtung verläuft sind Vorraussetzungen gegeben, dass im Vergleich zu einer seitlich am Roboterarm angeordneten Kamera eine Gefahr einer Behinderung der optischen Achse durch z.B. eine sich dem Werkzeug annähernden Person verringert wird. Dadurch ergibt sich eine verbesserte Sicht der Kamera des Roboters auf das Werkzeug.

Damit die Kamera durch die erste Befestigungsvorrichtung die Bilder aufnehmen kann, ist die erste Befestigungsvorrichtung zumindest im Bereich des Durchtretens der optischen Achse zumindest semitransparent ausgeführt. Dies kann z.B. erreicht werden, indem die erste Befestigungsvorrichtung in diesem Bereich kein Material oder ein Material aus einem zumindest semitransparenten Material aufweist.

Unter einer Kamera wird allgemein eine fototechnische Vorrichtung verstanden, die statische oder bewegte Bilder z.B. auf einem fotografischen Film, oder elektronisch beispiels- weise auf ein magnetisches Videoband oder digitales Speichermedium aufzeichnen kann. Die Kamera kann insbesondere als eine digitale Kamera ausgeführt sein oder auch ein Charged Coupled Device (CCD) Bildsensor sein. Auch die Verwendung einer Infrarot-Kamera ist möglich.

Die Kamera kann z.B. im Roboterarm, insbesondere am freien Ende des Roboterarms integriert und/oder mit der ersten Befestigungsvorrichtung fest verbunden sein.

Der Roboterarm des Roboters kann eine zweite Befestigungsvorrichtung aufweisen, die eingerichtet ist, die Kamera am Roboterarm lösbar anzuordnen. Die zweite Befestigungsvorrichtung ist beispielsweise ein Roboterflansch.

Die erste Befestigungsvorrichtung kann lösbar an der Kamera und/oder am Roboterarm angeordnet sein. Dadurch ergeben sich Vorraussetzungen für eine erhöhte Flexibilität des Roboters.

Die erste Befestigungsvorrichtung kann beispielsweise ein hohlzylinderförmiges Bauteil aufweisen, innerhalb dessen die optische Achse verläuft. Dieses hohlzylinderförmige Bauteil kann insbesondere die Form eines Kreiszylinders haben und z.B. zur mechanischen Kopplung von Roboter und Werkzeug und damit zur Übertragung von Kräften und Momenten dienen.

Der Innenraum des hohlzylinderförmigen Bauteils kann frei von einem Material sein, um der optischen Achse der Kamera ein ungehindertes Durchtreten durch die erste Befestigungsvorrichtung zu erlauben.

Roboter können z.B. im medizinischen Umfeld verwendet werden. Medizinische Roboter, zumindest Teile von diesen, sollten, insbesondere wenn sie z.B. in einem Operationssaal, allgemein in einem Behandlungsraum eingesetzt werden, möglichst steril sein. Wenn der Roboter als medizinischer Roboter eingesetzt werden soll, dann sollte er demnach auch Vorraussetzungen für eine Wahrung der Sterilität bieten.

Insbesondere wenn der Roboter als medizinischer Roboter verwendet wird, kann dieser eine an der ersten Befestigungsvorrichtung angeordnete Hülle aufweisen, die vorgesehen ist, den Roboterarm zumindest teilweise zu umhüllen. Die Hülle, zumindest ihre Außenseite, ist z.B. eine sterile Hülle oder kann sterilisiert werden.

Innerhalb dem hohlzylinderförmigen Bauteil der ersten Befestigungsvorrichtung kann ein zumindest semitransparentes Bauteil vorgesehen sein. Das Material des zumindest semitransparenten Bauteils ist z.B. Glas. Das zumindest semitransparente Bauteil ist z.B. flächig und kann die Form eines Fensters haben. Insbesondere in Kombination mit der Hülle für den Roboterarm ergeben sich relativ gute Vorraussetzungen zum Schaffen eines Roboters, der die relativ hohen Anforderungen an die Sterilität im medizinischen Umfeld erfüllt. Die Ausführungsform der ersten Befestigungsvorrichtung als hohlzylinderförmiges Bauteil, dessen Innenraum zusätzlich auch noch mit dem zumindest semitransparenten Bauteil ausgefüllt ist, kann folgende Vorteile bieten:
Das hohlzylinderförmige Bauteil als solches dient der mechanischen Koppelung von Roboter und Werkzeug und damit zur Übertragung von Kräften und Momenten.

Durch das zumindest semitransparente Bauteil, das den Innenraum des hohlzylinderförmigen Bauteils ausfüllt, kann eine Trennung eines sterilen Bereichs des Roboters von einem unsterilen Bereich erreicht werden. Das an der ersten Befestigungsvorrichtung zu befestigende Werkzeug ist z.B. steril und die Mechanik des Roboters, insbesondere dessen Roboterarm, ist in der Regel unsteril. Durch die Trennung dieser beiden Bereiche kann z.B. ein Operationsfeld geschützt werden.

Die außenseitig am hohlzylinderförmigen Bauteil angeordnete Hülle kann dann z.B. vor einer Behandlung eines Lebewesens mit dem erfindungsgemäßen Roboter zusammen mit der ersten Befestigungsvorrichtung, insbesondere wenn diese von der Kamera bzw. dem Roboterarm gelöst werden kann, sterilisiert werden. Somit ist es möglich, die erste Befestigungsvorrichtung, insbesondere mittels des hohlzylinderförmigen Bauteils z.B. mit einem Fixierring am unsterilen Roboterarm, insbesondere an der Kamera zu befestigen. Anschließend kann die Hülle so über den Roboterarm zumindest teilweise gezogen werden, dass ihre Außenseite steril bleibt und die Innenseite den unsterilen Roboterarm zumindest teilweise abdeckt.

Ist innerhalb dem hohlzylinderförmigen Bauteil das zumindest semitransparente Bauteil, das z.B. als ein durchsichtiges Fenster ausgeführt ist, angeordnet, dann kann das zumindest semitransparente Bauteil eine Sterilitätsgrenze zwischen dem Operationsfeld bzw. dem sterilen bzw. sterilisierten Werkzeug einerseits und dem Roboterarm mit Kamera andererseits darstellen und zugleich die optische Achse der Kamera freihalten. Der Innenraum des zylinderförmigen Bauteils ist somit für die optische Achse zumindest semidurchlässig, so dass die Kamera Bilder erstellen kann.

Die optische Achse kann parallel zu einer der Achsen des Roboters verlaufen oder fällt mit dieser Achse zusammen.

Mittels der Kamera bzw. mit einem mittels der Kamera aufgenommenen Bildes kann der Roboter ein Befestigen des Werkzeugs an die erste Befestigungsvorrichtung unterstützen.

Das mit der Kamera aufgenommene Bild bzw. ein dem Bild zugeordneter Bilddatensatz kann z.B. verwendet werden, mittels einer geeigneten Bildverarbeitung eine Transformation von Werkzeug und Roboterarm für das Bewegen bzw. Berechnen der Bahn zu errechnen. Dadurch ergeben sich Vorraussetzungen für ein relativ kollisionsfreies Ankoppeln der ersten Befestigungsvorrichtung an das Werkzeug, das, wenn der Roboter im medizinischen Umfeld eingesetzt wird, z.B. rigide mit einem Patienten verbunden wurde. Dieses Szenario ist beispielsweise relevant bei einer Reihe klinischer Anwendungen, wie z.B. Positionierungsaufgaben.

Im medizinischen Umfeld ist der chirurgische Arbeitsraum in der Regel beengt. Für das erfindungsgemäße Verfahren ist es lediglich nötig, dass die Kamera ein Bild vom Werkzeug erstellen kann, wodurch das erfindungsgemäße Verfahren relativ flexibel ist. Es kann aber auch eine Reihe von Bildern während der Bewegung des Roboters aufgenommen werden, so dass beispielsweise der Roboter auf Bewegungen des mit dem Patienten verbundenen Werkzeugs reagieren und diese kompensieren kann.

Das Werkzeug kann beispielsweise Marker aufweisen. Nach einer Variante des erfindungsgemäßen Verfahrens werden von im Bild aufgenommene Marker oder markante Strukturen des Werkzeugs für das Bewegen des Roboterarms oder zum Berechnen der Bahn verwendet. Die Geometrie dieser Marker bzw. der markanten Strukturen ist bekannt.

Umfasst die erste Befestigungsvorrichtung das hohlzylinderförmige Bauteil, dann kann dieses mit Nuten zur Orientierung versehen sein und über Feststellringe mit dem Roboterarm verbunden werden. Die entsprechenden Gegenstücke können zur Verriegelung am Roboterarm und am Werkzeug vorhanden sein und können die Kamera bzw. Marker umgeben. Vor Beginn einer Behandlung eines Lebewesens mit dem als medizinischen Roboter ausgeführten Roboter kann die erste Befestigungsvorrichtung z.B. mit dem erwähnten Feststellring am Roboterarm befestigt werden.

Für eine zumindest halb-automatische Koppelung kann der Roboterarm mit dieser Information so gesteuert werden, dass die bevorzugt sterile Seite des hohlzylinderförmigen Bauteils insbesondere kollisionsfrei in das Gegenstück auf dem Werkzeug geführt wird. Abschließend kann dann die kraftschlüssige Fixierung am Werkzeug über den anderen Feststellring erfolgen, ohne dass dabei wesentliche Kräfte auf das Werkzeug ausgeübt werden.

Nach einer Ausführungsform der erfindungsgemäßen Verfahren weisen diese zusätzlich folgende Verfahrensschritte auf:
- Aufnehmen weiterer Bilder vom Werkzeug mittels der Kamera während der Roboterarm die erste Befestigungsvorrichtung in Richtung des Werkzeugs bewegt,
- Auswerten der weiteren Bilder und
- aufgrund der ausgewerteten weiteren Bilder, automatisches Bewegen des Roboterarms in Richtung des Werkzeugs bzw. gegebenenfalls Ändern der Bahn.

Dadurch kann die automatische Bewegung des Roboterarms für das Ankoppeln des Werkzeugs verbessert werden, wodurch die Gefahr einer Kollision der ersten Befestigungsvorrichtung mit dem Werkzeug verringert werden kann.

Nach einer Ansführungsform der zweiten Variante weist diese zusätzlich die folgenden Verfahrensschritte auf:
- Bewegen des Roboterarms mittels Positionsregelung, bis die erste Befestigungsvorrichtung den vorgegebene Abstand zum Werkzeug erreicht hat, und
- anschließendes Bewegen des Roboterarms mittels Impedanzregelung, bis die erste Befestigungsvorrichtung das Werkzeug erreicht.

Dies kann bei Positionierungsfehlern dazu führen, dass die Kontaktkraft, in Abhängigkeit von der virtuellen Impedanz, zwischen dem Werkzeug und der ersten Befestigungsvorrichtung beschränkt bleibt.

Die Messung des Abstandes kann darüber hinaus verwendet werden, um bei Kameras mit optischem Zoom die Brennweite automatisch anzupassen. Alternativ kann eine eventuell auftretende Unschärfe zur Erhöhung der Genauigkeit durch geeignete Bildverarbeitungsalgorithmen herangezogen werden.

Werden Marker am Werkzeug verwendet, dann ist es möglich, anhand der Markergeometrie automatisch eine geeignete Bewegungsstrategie auszuwählen, eine Dokumentation durchzuführen und/oder es kann eine Erkennung bzw. Kontrolle des verwendeten Werkzeugs stattfinden.

Eine Speicherung der Bilder (kontinuierlich bzw. Ereignis abhängig) kann zu Dokumentationszwecken erfolgen. Hierzu kann der erfindungsgemäße Roboter mit dem Krankenhaus-Netz verbunden sein (Stichwort: PACS). Die Archivierung des Bildes kann insbesondere im DICOM Format in Verbindung mit den Patientendaten erfolgen.

Werden die Marker z.B. durch den behandelnden Arzt verdeckt, dann kann aus Sicherheitsgründen automatisch die Bewegung des Roboters abgebrochen werden.

Ausführungsbeispiele der Erfindung sind exemplarisch in den beigefügten schematischen Zeichnungen dargestellt. Es zeigen:
- Fig. 1: einen Roboter,
- Fig. 2: eine Kamera, ein Werkzeug und eine Befestigungsvor- richtung für das Werkzeug in einer perspektivischen Ansicht,
- Fig. 3: eine Seitenansicht der Kamera, des Werkzeugs und der Befestigungsvorrichtung der Fig. 2 in geschnit- tener Darstellung,
- Fig. 4: die Befestigungsvorrichtung der Fig. 2, an der die Kamera und das Werkzeug befestigt sind,
- Fig. 5: eine Seitenansicht der Kamera, des Werkzeugs und der Befestigungsvorrichtung der Fig. 4 in geschnit- tener Darstellung und
- Fig. 6: ein Flussdiagramm zur Veranschaulichung eines Ver- fahrens zum Befestigen des Werkzeugs an die Befes- tigungsvorrichtung.

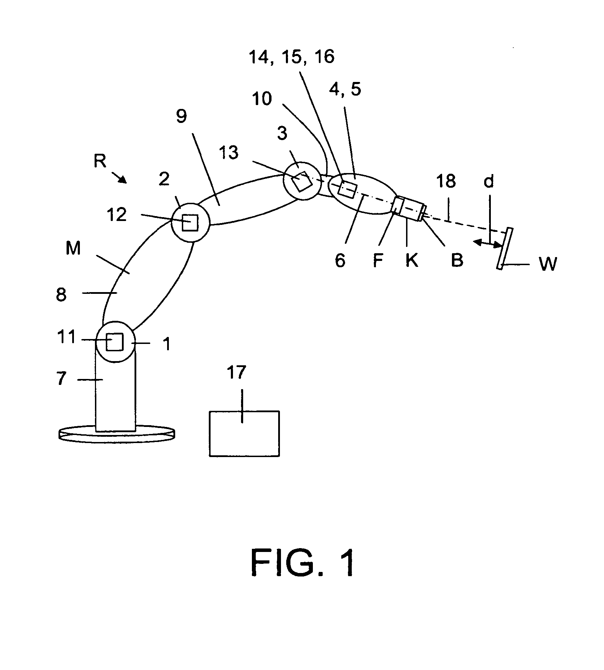

Die Fig. 1 zeigt einen Roboter R mit einem Roboterarm M. Im Falle des vorliegenden Ausführungsbeispiels handelt es sich bei dem Roboter R um einen medizinischen Roboter R, mit dem beispielsweise ein in den Figuren nicht näher dargestelltes Lebewesen behandelt werden kann. Der Roboterarm M stellt im Wesentlichen den beweglichen Teil des Roboters R dar und umfasst mehrere Achsen 1-6, mehrere Hebel 7-10 und einen Flansch F.

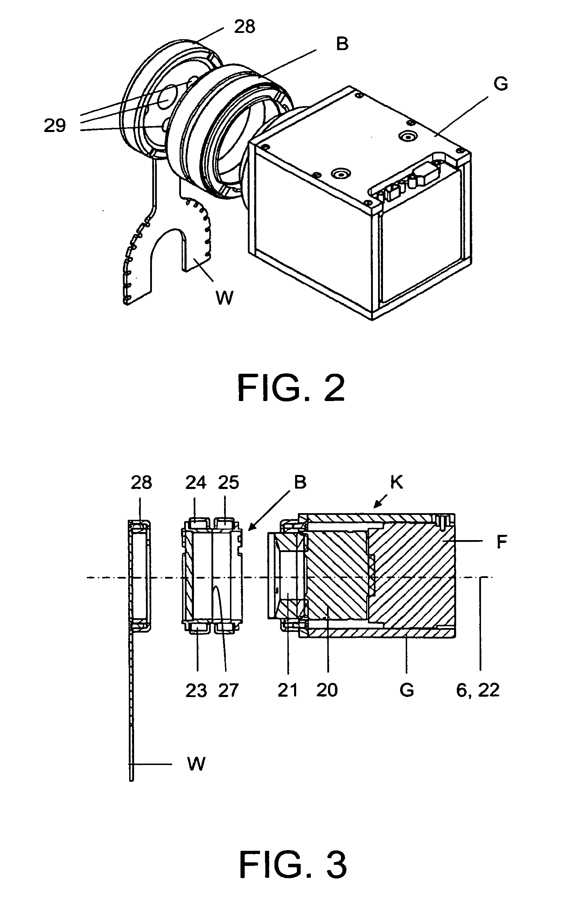

Im Falle des vorliegenden Ausführungsbeispiels ist am Flansch F des Roboterarms M eine in den Figuren 2-5 näher dargestellte Kamera K befestigt, an dessen Gehäuse G eine Befestigungsvorrichtung B für eine Werkzeug W befestigt werden kann. Das Werkzeug W ist z.B. ein medizinisches, insbesondere ein chirurgisches Instrument, wie beispielsweise ein oraler Splint für Kieferrepositionierungen.

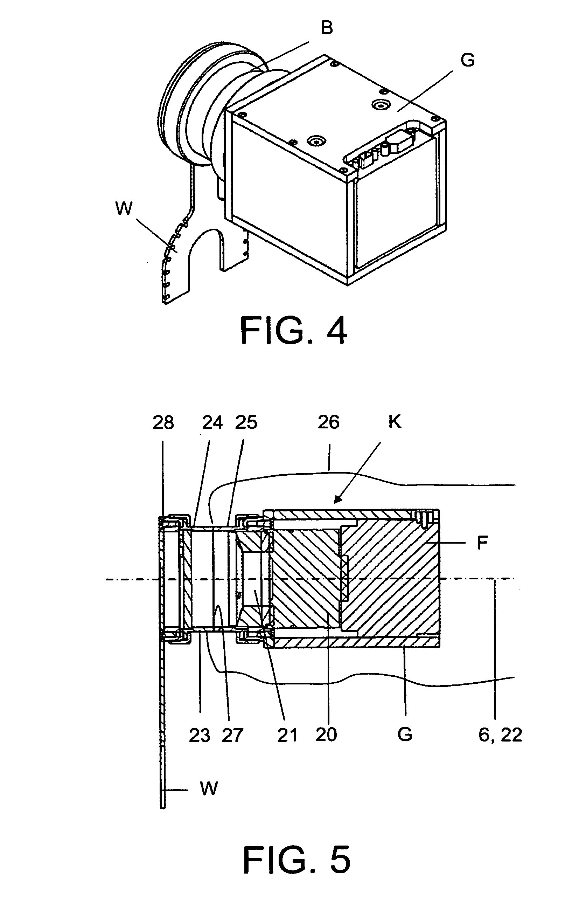

Wie bereits erwähnt, weist der Roboter R die Befestigungsvorrichtung B auf, die im Falle des vorliegenden Ausführungsbeispiels lösbar an die Kamera K, insbesondere an dessen Gehäuse G, bzw. an dem Roboterarm M befestigt werden kann. Die Figuren 2 und 3 zeigen die Befestigungsvorrichtung B gelöst von der Kamera K und dem Werkzeug W und die Figuren 4 und 5 zeigen einen Zustand, in dem die Befestigungsvorrichtung B an der Kamera K, insbesondere an dessen Gehäuse G, bzw. am Roboterarm M und am Werkzeug W befestigt ist. Es ist aber auch möglich, dass die Befestigungsvorrichtung B unlösbar mit dem Roboterarm M bzw. mit der Kamera K verbunden ist. Es ist auch möglich, dass die Kamera K im Roboterarm M, insbesondere an dessen freiem Ende integriert ist.

Im Falle des vorliegenden Ausführungsbeispiels weist die Kamera K das Gehäuse G, eine Elektronik 20 und eine bildgebende Optik 21 auf, nimmt im Betreib Bilder entlang ihrer optischen Achse 22 auf und ist derart am Flansch F befestigt, dass ihre optische Achse 22 mit der Achse 6 des Roboterarms M zusammenfällt. Die Kamera K ist z.B. eine digitale Kamera oder ein CCD-Sensor. Die Kamera K kann aber auch eine Infrarotkamera sein.

Die Befestigungsvorrichtung B weist im Falle des vorliegenden Ausführungsbeispiels ein hohlzylinderförmiges Bauteil 23 auf, das z.B. aus Metall gefertigt ist. Das hohlzylinderförmige Bauteil 23 weist Feststellringe 24, 25 auf. Mit dem Feststellring 25 kann die Befestigungsvorrichtung B an das Gehäuse G der Kamera K befestigt werden, indem die dem Feststellring 25 zugeordnete Seite des hohlzylinderförmigen Bauteils 23 an die der Optik 21 der Kamera K zugeordnete Seite des Gehäuses G zugeführt wird und mittels des Feststellrings 25 und einem dem Feststellring 25 entsprechenden und am Gehäuse G angeordneten Gegenstück befestigt wird. Anschließend wird eine an der Befestigungsvorrichtung B angeordnete Hülle 26 zumindest teilweise über den Roboterarm M gestülpt. Die Hülle 26 und die Befestigungsvorrichtung B wurden vor dem Befestigen der Befestigungsvorrichtung B an den Roboterarm M sterilisiert.

Im Falle des vorliegenden Ausführungsbeispiels ist innerhalb des hohlzylinderförmigen Bauteils 23 ein zumindest semitransparentes Bauteil, z.B. ein Fenster 27 aus Glas angeordnet, durch das die Kamera K, wenn die Befestigungsvorrichtung B am Roboterarm M befestigt ist, die Bilder aufnehmen kann. Durch das Fenster 27 wird eine Sterilitätsgrenze zwischen dem Werkzeug W und dem Roboterarm M bzw. der Kamera K gebildet.

Im Falle des vorliegenden Ausführungsbeispiels wird jede der Achsen 1-6 mit einem Antrieb, beispielsweise einem elektrischen Antrieb 11-16 bewegt, die in nicht dargestellter Weise mit einem Steuerrechner 17 des Roboters R elektrisch verbunden sind, so dass der Steuerrechner 17 bzw. ein auf dem Steuerrechner 17 laufendes Rechnerprogramm die elektrischen Antriebe 11-16 derart ansteuern kann, dass die Position des am Roboterarm M bzw. am Gehäuse G der Kamera K befestigten Befestigungsvorrichtung B im Wesentlichen frei im Raum ausgerichtet werden kann. Die elektrischen Antriebe 11-16 des Roboters R umfassen z.B. jeweils einen elektrischen Motor und gegebenenfalls eine die Motoren ansteuernde Leistungselektronik.

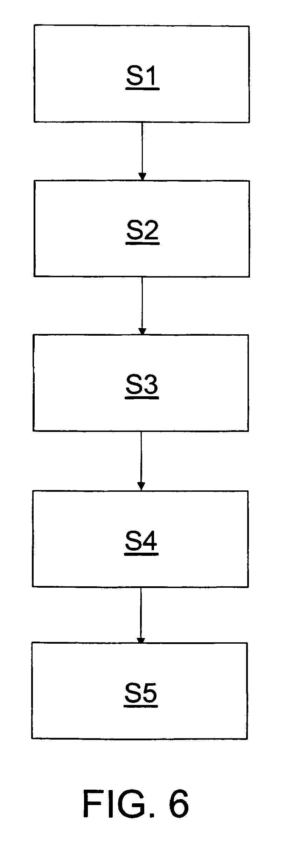

Im Falle des vorliegenden Ausführungsbeispiels ist auch die Kamera K mit dem Steuerrechner 17 in nicht dargestellter Weise verbunden und ist der Steuerrechner 17 derart ausgeführt, dass er bzw. ein auf ihm laufendes Rechnerprogramm ein Ankoppeln der Befestigungsvorrichtung B an das Werkzeug W zumindest in halbautomatischer Weise steuert, was mit einem in der Figur 6 dargestellten Flussdiagramm veranschaulicht ist.

Im Falle des vorliegenden Ausführungsbeispiels wird zunächst der Roboterarm M, an dem die Befestigungsvorrichtung B bereits befestigt ist, in die Nähe des Werkzeugs W herangeführt, so dass die Kamera K ein Bild von dem Werkzeug W, insbesondere ein Bild von Markern 29, die am Werkzeug W angeordnet sind, aufnehmen kann, Schritt S1 des Flussdiagramms. Die Marker 29 sind im Bereich einer Befestigungseinrichtung 28 des Werkzeugs W, die mit dem Feststellring 24 der Befestigungsvorrichtung B zusammenwirken soll, angebracht.

Im Falle des vorliegenden Ausführungsbeispiels ist eine Information über die Geometrie der Marker 29 im Steuerrechner 17 gespeichert. Ein auf dem Steuerrechner 17 laufendes Rechnerprogramm erkennt mittels eines Bilderkennungsalgorithmus die im Bild abgebildeten Marker 29 des Werkzeugs W, Schritt S2 des Flussdiagramms, und bewegt daraufhin automatisch den Roboterarm M derart, dass sich die Befestigungsvorrichtung B entlang einer Bahn 18 in Richtung zum Werkzeug W, insbesondere in Richtung zur Befestigungseinrichtung 28 des Werkzeugs W bewegt. In diesem Betriebszustand befindet sich der Roboter R in einer Positionsregelung.

Im Falle des vorliegenden Ausführungsbeispiels erstellt die Kamera K während der Bewegung der Befestigungsvorrichtung B entlang der Bahn 18 weitere Bilder, die von dem auf dem Steuerrechner 17 laufenden Rechnerprogramm ausgewertet werden, damit die Befestigungsvorrichtung B entlang der Bahn 18 bewegt wird, Schritt S3 des Flussdiagramm.

Befindet sich im Falle des vorliegenden Ausführungsbeispiels die Befestigungsvorrichtung B in einem vorgegebenen Abstand d vom Werkzeug W, so schaltet der Steuerrechner 17 automatisch von der Positionsregelung auf eine Impedanzregelung um, Schritt S4 des Flussdiagramms.

Anschließend koppelt der Roboter R die Befestigungsvorrichtung B an die Befestigungseinrichtung 28 des Werkzeugs W an, Schritt S5 des Flussdiagramms, so dass der Feststellring 24 manuell mit der Befestigungseinrichtung 28 verbunden werden kann, um das Werkzeug W an die Befestigungsvorrichtung B zu montieren.

Es kann noch vorgesehen sein, aufgrund der mit den Bildern aufgenommenen Markern 29 eine Dokumentation durchzuführen und/oder eine Erkennung bzw. Kontrolle des verwendeten Werkzeugs W durchzuführen.

Eine Speicherung der Bilder (kontinuierlich bzw. Ereignis abhängig) kann zu Dokumentationszwecken erfolgen. Hierzu kann der Roboter R oder der Steuerrechner 17 mit einem nicht näher dargestellten Krankenhaus-Netz verbunden sein (Stichwort: PACS). Die Archivierung des Bildes kann insbesondere im DICOM Format in Verbindung mit Patientendaten erfolgen.

Werden die Marker 29 z.B. durch eine nicht näher dargestellte Person verdeckt, dann kann es vorgesehen sein, aus Sicherheitsgründen automatisch die Bewegung des Roboters R automatisch abzubrechen.

Im eben beschriebenen Ausführungsbeispiel bewegt der Roboter R automatisch die Befestigungsvorrichtung B an das Werkzeug W. Alternativ kann es auch vorgesehen sein, dass das auf dem Steuerrechner 17 laufende Rechnerprogramm die Bahn 18 berechnet und der Roboterarm M anschließend manuell auf dieser Bahn 18 geführt wird. Dabei kann es vorgesehen sein, dass der Roboter R derart angesteuert wird, dass eine manuelle Bewegung nur entlang dieser Bahn 18 ermöglicht wird und/oder eine Bewegung des Roboterarms M nicht mehr möglich ist oder erschwert wird, wenn sich die Befestigungsvorrichtung B im Abstand d vom Werkzeug W befindet.

## Patentansprüche

1. Verfahren zum Befestigen eines Werkzeugs an einen Roboter, der einen Roboterarm (M) mit mehreren Achsen (1-6), eine mittels des Roboterarms (M) bewegbare erste Befestigungsvorrichtung (B) zum Befestigen eines Werkzeugs (W), und eine in oder am Roboterarm (M) angeordnete Kamera (K) mit einer zur ersten Befestigungsvorrichtung (B) zugewandten bildgebenden Optik (21), die derart mit der ersten Befestigungsvorrichtung (B) gekoppelt ist, dass eine von der Optik (21) ausgehende optische Achse (22) durch die erste Befestigungsvorrichtung (B) hindurch tritt, aufweist, wobei die erste Befestigungsvorrichtung (B) zumindest im Bereich des Durchtretens der optischen Achse (22) zumindest semi-transparent ist, aufweisend folgende Verfahrensschritte:
- Aufnehmen eines Bildes von dem an die erste Befestigungsvorrichtung (B) zu befestigenden Werkzeugs (W),
- Auswertens des Bildes,
- aufgrund des ausgewerteten Bildes, automatisches Berechnen einer Bahn (18), auf der die erste Befestigungsvorrichtung (B) manuell bewegt werden kann, bis diese das Werkzeug (W) erreicht, und
- manuelles Heranführen der ersten Befestigungsvorrichtung entlang der berechneten Bahn (18), bis diese das Werkzeug (W) erreicht hat.

2. Verfahren nach Anspruch 1, aufweisend
- Aufnehmen weiterer Bilder vom Werkzeug (W) mittels der Kamera (K) während der Roboterarm (M) die erste Befestigungsvorrichtung (B) in Richtung des Werkzeugs (W) bewegt,
- Auswerten der weiteren Bilder und
- aufgrund der ausgewerteten weiteren Bilder, gegebenenfalls Ändern der Bahn (18).

3. Verfahren zum Befestigen eines Werkzeugs an einen Roboter, der einen Roboterarm (M) mit mehreren Achsen (1-6), eine mittels des Roboterarms (M) bewegbare erste Befestigungsvorrichtung (B) zum Befestigen eines Werkzeugs (W), und eine in oder am Roboterarm (M) angeordnete Kamera (K) mit einer zur ersten Befestigungsvorrichtung (B) zugewandten bildgebenden Optik (21), die derart mit der ersten Befestigungsvorrichtung (B) gekoppelt ist, dass eine von der Optik (21) ausgehende optische Achse (22) durch die erste Befestigungsvorrichtung (B) hindurch tritt, aufweist, wobei die erste Befestigungsvorrichtung (B) zumindest im Bereich des Durchtretens der optischen Achse (22) zumindest semi-transparent ist, aufweisend folgende Verfahrensschritte:
- Aufnehmen eines Bildes von dem an die erste Befestigungsvorrichtung (B) zu befestigenden Werkzeugs (W),
- Auswertens des Bildes,
- aufgrund des ausgewerteten Bildes, automatisches Bewegen des Roboterarms (M) derart, dass sich die erste Befestigungsvorrichtung (B) in Richtung des Werkzeugs (W) bewegt, bis die erste Befestigungsvorrichtung (B) das Werkzeug (W) oder einen vorgegebenen Abstand (d) zum Werkzeug (W) erreicht hat.

4. Verfahren nach Anspruch 3, aufweisend
- Aufnehmen weiterer Bilder vom Werkzeug (W) mittels der Kamera (K) während der Roboterarm (M) die erste Befestigungsvorrichtung (B) in Richtung des Werkzeugs (W) bewegt,
- Auswerten der weiteren Bilder und
- aufgrund der ausgewerteten weiteren Bilder, automatisches Bewegen des Roboterarms (M) in Richtung des Werkzeugs (W).

5. Verfahren nach Anspruch 3 oder 4, aufweisend
- Bewegen der Roboterarms (M) mittels Positionsregelung, bis die erste Befestigungsvorrichtung (B) den vorgegebenen Abstand (d) zum Werkzeug (W) erreicht hat, und
- anschließendes Bewegen des Roboterarms (M) mittels Impedanzregelung, bis die erste Befestigungsvorrichtung (B) das Werkzeug (W) erreicht.

6. Verfahren nach einem der Ansprüche 1 bis 5, aufweisend Erkennen von im Bild aufgenommener Marker (29) oder markanter Strukturen des Werkzeugs (W) für das Bewegen des Roboterarms (M) oder zum Berechnen der Bahn (18).

7. Verfahren nach einem der Ansprüche 1 bis 5, wobei die optische Achse (22) parallel zu einer der Achsen (6) des Roboters (R) verläuft oder mit dieser Achse (6) zusammenfällt.

8. Verfahren nach einem der Ansprüche 1 bis 7, wobei die erste Befestigungsvorrichtung (B) lösbar an der Kamera (K) und/oder am Roboterarm (M) angeordnet ist.

9. Verfahren nach einem der Ansprüche 1 bis 8, wobei die erste Befestigungsvorrichtung (B) ein hohlzylinderförmiges Bauteil (23) aufweist, innerhalb dem die optische Achse (22) verläuft.

10. Verfahren nach Anspruch 9, wobei innerhalb dem hohlzylinderförmigen Bauteil (23) der ersten Befestigungsvorrichtung (B) ein zumindest semitransparentes Bauteil (27) vorgesehen ist.

11. Verfahren nach einem der Ansprüche 1 bis 10, wobei der Roboter (R) eine an der ersten Befestigungsvorrichtung (B) angeordnete Hülle (26) zum zumindest teilweisen Umhüllen des Roboterarms (M) aufweist.

12. Verfahren nach einem der Ansprüche 1 bis 11, wobei der Roboter (R) eine am Roboterarm (M) angeordnete zweite Befestigungsvorrichtung (F) aufweist, die eingerichtet ist, die Kamera (K) am Roboterarm (M) lösbar anzuordnen.

## Claims

1. A method for fastening a tool to a robot comprising a robotic arm (M) with several axes (1-6), a first mounting device (B) for fastening a tool (W)which is movable by means of the robotic arm (M), and a camera (K) which is arranged in or on the robotic arm (M) and comprises an optical lens (21), which is turned toward the first mounting device (B) and coupled in such a manner with the first mounting device (B) that an optical axis (22) emanating from the optical lens (21) extends through the first mounting device (B), wherein the first mounting device is at least semitransparent (B) at least in the range of the extending optical axis (22), comprising the steps of:
- taking of a picture of the tool which is to be fastened (W) on the first mounting device (B),
- evaluating the picture,
- on the basis of the evaluated picture, automatic calculating of a course (18), on which the first mounting device (B) can be manually moved until this reaches the tool (W), and
- manually moving of the first mounting device along the calculated course (18) until this reaches the tool (W).

2. The method according to claim 1, comprising
- taking of further pictures of the tool (W) by means of the camera (K) during which the robotic arm (M) moves the first mounting device (B) toward the tool (W),
- evaluating of the further pictures and
- changing of the course (18) if necessary on the basis of the evaluated further pictures.

3. A method for fastening a tool to a robot comprising a robotic arm (M) with several axes (1-6), a first mounting device (B) for fastening a tool (W)which is movable by means of the robotic arm (M), and a camera (K) which is arranged in or on the robotic arm (M) and comprises an optical lens (21), which is turned toward the first mounting device (B) and coupled in such a manner with the first mounting device (B) that an optical axis (22) emanating from the optical lens (21) extends through the first mounting device (B), wherein the first mounting device is at least semitransparent (B) at least in the range of the extending optical axis (22), comprising the steps of:
- taking of a picture of the tool which is to be fastened (W) on the first mounting device (B),
- evaluating of the picture,
- automatic moving of the robotic arm (M) on the basis of the evaluated picture, in such a way that the first mounting device (B) moves in the direction of the tool (W) until the first mounting device (B) reaches the tool (W) or a predefined distance (d) to the tool (W).

4. The method according to claim 3, comprising
- taking of further pictures of the tool (W) by means of the camera (K) during which the robotic arm (M) moves the first mounting device (B) in the direction of the tool (W),
- evaluating of the further pictures and
- automatic changing of the movement of the robotic arm (M) in the direction of the tool (W) 18) on the basis of the evaluated further pictures.

5. The method according to claim 3 or 4, comprising
- moving of the robotic arm (M) by means of position control until the first mounting device (B) has reached the predefined distance (D) to the tool (W), and
- subsequent moving of the robotic arm (M) by means of impedance control until the first mounting device (B) reaches the tool (W).

6. The method according to one of the claims 1 to 5, comprising recognizing of markers (29), taken up in the picture, or salient structures of the tool (W) for moving the robotic arm (M) or for calculating of the course (18).

7. The method according to one of the claims 1 to 6, wherein the optical axis (22) runs parallel to one of the axes (6) of the robot (R) or coincides with this axis (6).

8. The method according to one of the claims 1 to 7, wherein the first mounting device (B) has been arranged at the camera (K) and/or at the robotic arm (M) such that it is removable.

9. The method according to one of the claims 1 to 8, wherein the first mounting device comprises (B) a hollow cylindrical component (23), within which the optical axis (22) runs.

10. The method according to claim 9, wherein an at least semitransparent component (27) is arranged within the hollow cylindrical component (23) of the first mounting device (B).

11. The method according to one the claims 1 to 10, wherein the robot (R) comprises a covering (26) arranged on the first mounting device (B) for at least a partial covering of the robotic arm (M).

12. The method according to one the claims 1 to 11, wherein the robot (R) comprises a second mounting device (F) arranged on the robotic arm (M), which second mounting device (F) is set up such that the camera (K) can be arranged to be removed from the robotic arm (M).

## Revendications

1. Procédé de fixation d'un outil sur un robot qui comporte un bras de robot (M) avec plusieurs axes (1-6), un premier dispositif de fixation (B) mobile au moyen du bras de robot (M) pour fixer un outil (W), et une caméra (K) agencée dans ou sur le bras de robot (M), comportant un système optique d'imagerie (21) tourné vers le premier dispositif de fixation (B), qui est couplé au premier dispositif de fixation (B) de telle sorte qu'un axe optique (22) partant du système optique (21) passe à travers le premier dispositif de fixation (B), le premier dispositif de fixation (B) étant au moins semi-transparent au moins dans la zone de traversée de l'axe optique (22), présentant les étapes de procédé suivantes :
- prise d'une image de l'outil (W) à fixer sur le premier dispositif de fixation (B),
- évaluation de l'image,
- sur la base de l'image évaluée, calcul automatique d'une trajectoire (18) sur laquelle le premier dispositif de fixation (B) peut être déplacé à la main jusqu'à ce que celui-ci atteigne l'outil (W), et
- approche manuelle du premier dispositif de fixation le long de la trajectoire (18) calculée jusqu'à ce que celui-ci ait atteint l'outil (W).

2. Procédé selon la revendication 1, présentant :
- la prise d'autres images de l'outil (W) au moyen de la caméra (K) pendant que le bras de robot (M) déplace le premier dispositif de fixation (B) en direction de l'outil (W),
- l'évaluation des autres images et
- sur la base des autres images évaluées, la modification de la trajectoire (18), le cas échéant.

3. Procédé pour fixer un outil sur un robot qui comporte un bras de robot (M) avec plusieurs axes (1-6), un premier dispositif de fixation (B) mobile au moyen du bras de robot (M) pour fixer un outil (W), et une caméra (K) agencée dans ou sur le bras de robot (M), comportant un système optique d'imagerie (21) tourné vers le premier dispositif de fixation (B), qui est couplé au premier dispositif de fixation (B) de telle sorte qu'un axe optique (22) partant du système optique (21) passe à travers le premier dispositif de fixation (B), le premier dispositif de fixation (B) étant au moins semi-transparent au moins dans la zone de traversée de l'axe optique (22), présentant les étapes de procédé suivantes :
- prise d'une image de l'outil (W) à fixer sur le premier dispositif de fixation (B),
- évaluation de l'image,
- sur la base de l'image évaluée, déplacement automatique du bras de robot (M) de telle sorte que le premier dispositif de fixation (B) se déplace en direction de l'outil (W) jusqu'à ce que le premier dispositif de fixation (B) ait atteint l'outil (W) ou une distance (d) prédéterminée par rapport à l'outil (W).

4. Procédé selon la revendication 3, présentant
- la prise d'autres images de l'outil (W) au moyen de la caméra (K) pendant que le bras de robot (M) déplace le premier dispositif de fixation (B) en direction de l'outil (W),
- l'évaluation des autres images et
- sur la base des autres images évaluées, le déplacement automatique du bras de robot (M) en direction de l'outil (W).

5. Procédé selon les revendications 3 ou 4, présentant
- le déplacement du bras de robot (M) par réglage de position jusqu'à ce que le premier dispositif de fixation (B) ait atteint la distance (d) prédéterminée par rapport à l'outil (W),
- le déplacement suivant du bras de robot (M) par un réglage d'impédance jusqu'à ce que le premier dispositif de fixation (B) atteigne l'outil.

6. Procédé selon l'une des revendications 1 à 5, présentant la reconnaissance de marqueurs (29) ou de structures marquantes de l'outil (W), photographié(e)s dans l'image, pour le déplacement du bras de robot (M) ou pour calculer la trajectoire (18).

7. Procédé selon l'une des revendications 1 à 6, dans lequel l'axe optique (22) s'étend parallèlement à l'un des axes (6) du robot (R) ou coïncide avec cet axe (6).

8. Procédé selon l'une des revendications 1 à 7, dans lequel le premier dispositif de fixation (B) est agencé de façon amovible sur la caméra (K) et/ou sur le bras de robot (M).

9. Procédé selon l'une des revendications 1 à 8, dans lequel le premier dispositif de fixation (B) présente un composant (23) en forme de cylindre creux à l'intérieur duquel s'étend l'axe optique (22).

10. Procédé selon la revendication 9, dans lequel un composant (27) au moins semi-transparent est prévu dans le composant (23) en forme de cylindre creux du premier dispositif de fixation (B).

11. Procédé selon l'une des revendications 1 à 10, dans lequel le robot (R) présente une enveloppe (26) agencée sur le premier dispositif de fixation (B) pour envelopper au moins partiellement le bras de robot (M).

12. Procédé selon l'une des revendications 1 à 11, dans lequel le robot (R) présente un deuxième dispositif de fixation (F) agencé sur le bras de robot (M), lequel est aménagé de manière à agencer la caméra (K) de façon amovible sur le bras de robot (M).
